# EUROPEAN PATENT APPLICATION

(11) **EP 1 635 179 A1**
(43) Date of publication of application: **15.03.2006**
(21) Application number: 05019509.8
(22) Date of filing: 08.09.2005
(51) Int. Cl.: G01P 15/18, G01P 15/125, G01P 1/02, G01H 11/06

(54) **Acceleration sensor**

(30) Priority: 13.09.2004 JP 2004265580
(71) Applicant: HOSIDEN CORPORATION, Yao-shi Osaka (JP)
(72) Inventor: Sugimori, Yasuo, Nabari-shi Mie 518-0719 (JP); Naoki, Toyota, Yao-shi Osaka 581-0071 (JP)
(74) Representative: Petersen, Frank

(57) **Abstract**

A three-axis acceleration sensor having a simple construction is provided for improving shock resistance without lowering sensor sensitivity.

An acceleration sensor for detecting acceleration in three orthogonal directions includes an electrode substrate (5) having fixed electrodes corresponding to three axes, respectively, a diaphragm (2) having one surface thereof opposed to the fixed electrodes acting as a movable electrode, and a weight (1) mounted centrally of the other surface of the diaphragm.

Acceleration is detected based on variations in capacitance between the fixed electrodes and diaphragm (2).

The electrode substrate (5) has an electret layer (4) formed to cover surfaces of the fixed electrodes.

## Description

### BACKGROUND OF THE INVENTION

### FIELD OF THE INVENTION

The present invention relates to an acceleration sensor for detecting acceleration in three orthogonal directions.

### DESCRIPTION OF THE RELATED ART

Various acceleration sensors have been proposed for detecting acceleration in three-dimensional directions, i.e. along X-axis, Y-axis and Z-axis. Japanese patent application "Kokai" No. 10-10150 cited herein as Document 1 (Figs. 1 to 3, and paragraphs 7 to 22), for example, discloses an acceleration sensor for detecting acceleration based on variations in capacitance between a fixed electrode and a movable electrode opposed to each other. According to this technique, one of the fixed electrode and movable electrode has an electret film formed on a surface thereof opposed to the other electrode. The movable electrode has a weight attached to a surface thereof facing away from the fixed electrode to allow for displacement of the movable electrode in time of impression of acceleration. The other electrode not having the electret film is divided along orthogonal axes crossing one another at an intersection corresponding to a position of projection of the center of gravity of the weight. That is, with one of the electrodes divided, acceleration along a plurality of axes is detected based on variations in capacitance of the divided electrode.

### SUMMARY OF THE INVENTION

Acceleration sensors and vibration sensors of the electret condenser microphone (hereinafter called "ECM") type as disclosed in Document 1 have various applications such as pedometers and vibrometers. These sensors are required to have high sensitivity comparable to that of ordinary sensors. However, when used as a pedometer, for example, the sensor is in many cases battery-driven, and naturally, abundant power supply cannot be expected. It is therefore undesirable to improve sensitivity electrically by using an IC (integrated circuit) for amplification which will consume a large amount of current.

An attempt to improve sensitivity mechanically will need to increase the force of inertia. However, when the amplitude of the movable electrode is increased in order to increase the force of inertia, the sensor will have reduced shock resistance in time of falling of the sensor. It is therefore difficult for the basic structure alone shown in Document 1 to cope fully with these problems.

The present invention has been made having regard to the above problems, and its object is to provide a three-axis acceleration sensor having a simple construction for improving shock resistance without lowering sensor sensitivity.

The above object is fulfilled, according to the present invention, by an acceleration sensor for detecting acceleration in three orthogonal directions, comprising:
an electrode substrate having fixed electrodes arranged on one surface thereof;
a diaphragm having one surface thereof opposed to the fixed electrodes across a spacer for defining a predetermined spacing with the electrode substrate, and acting as a movable electrode;
a weight mounted centrally of the other surface of the diaphragm; and
a conductive case for accommodating the electrode substrate, the spacer, the diaphragm and the weight;

wherein the acceleration in three orthogonal directions is detected based on variations in capacitance between the fixed electrodes and the movable electrode;
characterized in that the fixed electrodes include an annular, first fixed electrode extending around a first axis extending through a center of gravity of the weight and perpendicular to the electrode substrate, and second fixed electrodes and third fixed electrodes that are two parts each of an annular electrode having a larger diameter than the first fixed electrode, and divided by dividing axes intersecting at right angles to each other at an intersection of the electrode substrate and the first axis, and forming 45 degrees with a second axis and a third axis extending perpendicular to the first axis; and
that the electrode substrate has an electret layer formed to cover surfaces of the fixed electrodes.

With this characteristic construction, the acceleration sensor according to the invention is the ECM type using an electret, and can therefore output a capacitance directly as a voltage. Consequently, output voltage of the ECM may be given directly to an inexpensive general-purpose operational amplifier or the like without requiring an expensive capacitance-voltage conversion circuit (CV conversion circuit). The ECM type construction does not require a bias circuit for impressing a bias voltage between the diaphragm (movable electrode) and fixed electrodes, thereby allowing for compact circuitry and reducing cost.

A CV conversion circuit often comprises an IC (integrated circuit) for exclusive use, and a construction has been proposed for processing signals for three axes with one IC, but this consumes current as large as several milliamperes. Therefore, when this acceleration sensor is incorporated into a battery-driven device, the battery will be consumed quickly, which is undesirable. A general-purpose operational amplifier consumes current as small as several microamperes, and can reduce power consumption of the device.

As a feature of the invention, the fixed electrodes may be formed on a surface of the electrode substrate without protruding or sinking therefrom.

The electret layer is formed on the surface of the electrode substrate, for example, by calcining an aqueous dispersion of fluororesin applied to the surface of the electrode substrate to serve as electret, or by applying a fluoride film to the surface of the electrode substrate. The fixed electrodes are formed of copper foil or the like on the electrode substrate. Usually, these are provided by an electric conducting pattern of copper foil is formed by etching or the like on a glass epoxy backing serving as an insulator. Thus, although very thin, the pattern of copper foil is raised above the backing of the substrate. Then, the thickness of the electret layer formed thereon may become uneven. This may affect the capacitance detected and the voltage outputted as a result, which is undesirable. Where the copper foil forming the electrode pattern is provided to be flush with the surface of the backing of the substrate, without protruding or sinking from the surface, the thickness of the electret layer may be uniformed.

As another feature of the invention, the fixed electrodes are formed of copper foil, and the electret layer is formed, after plating the fixed electrodes with nickel or gold, by applying thereto and calcining an aqueous dispersion of a fluororesin, or applying thereto a fluoride film.

Copper, because of its excellent electrical conductivity, is generally used as electrodes arranged on a substrate as described above. However, copper foil widely used for electrode patterns easily oxidizes and discolors to reduce the function as electret. Particularly when an aqueous dispersion of fluororesin is applied and calcined to serve as electret layer, the copper foil may oxidize and become dark. Since copper foil easily oxidizes and discolors, and may discolor also when a fluoride film is applied.

The above problem may be lessened by plating the copper foil with nickel or gold, before coating with the electret by applying the fluoride film or by applying and calcining the aqueous dispersion of a fluororesin.

As a further feature of the invention, the diaphragm includes a fixed portion located peripherally and fixed through the spacer, a vibrating portion located centrally and having the weight, and an elastic support portion connecting the fixed portion and the vibrating portion, the elastic support portion including a ring having an elliptical shape, first beams connecting the vibrating portion and the ring on a long axis of the elliptical shape, and second beams connecting the fixed portion and the ring on a short axis of the elliptical shape.

Where the diaphragm is divided into a fixed portion, a vibrating portion and an elastic support portion, the elastic support portion connecting the fixed portion and vibrating portion includes beams acting as torsion bar anchors, and a base connecting the beams. Since it is necessary to secure a large area for the vibrating portion in order to obtain, as much as possible, vibrations in capacitance by ECM, it is undesirable to allow the elastic support portion, particularly the base, to occupy a large area. However, if the area of the base is narrowed, that is if the base is formed thin, since this base acts as a spring, a difference occurs in mechanical vibration of the vibrating portion between vibration along the second axis and vibration along the third axis, or XY directions, among the three axial directions detected by the acceleration sensor. This difference is reflected on the output of the acceleration sensor, and then a correction circuit may be required.

As in the above characteristic construction, the elastic support portion includes a base in the form of a ring having an elliptical shape, two first beams connecting the vibrating portion and the ring on the long axis of the ring, and second beams connecting the fixed portion and the ring on the short axis of the ring. Then, the vibrating portion may be formed circular. Where the vibrating portion is formed circular, even if the base is formed narrow (or thin), the difference in mechanical vibration of the vibrating portion between the XY directions may be lessened. As a result, a correction circuit or the like is not required, and the circuit construction may be made simple and compact.

The diaphragm may include projections formed peripherally thereof for electrically connecting the case and the diaphragm.

In addition, the diaphragm may define narrow slits in positions inwardly of the projections, and extending parallel to tangents to the projections at points of contact between the projections and the case.

Further, the slits may have semicircular cutouts bulging in the same directions as the projections on lines extending perpendicular to the tangents at the points of contact.

The case and diaphragm must be electrically connected. The diaphragm has the projections for contacting the case to establish an electrical connection simultaneously with assembly. Thus, this construction facilitates assembly.

However, the diaphragm could undergo an excessive force applied thereto by a reaction transmitted from the case to the projections, to distort the diaphragm. In this case, the distance between the diaphragm and fixed electrodes could become uneven, thereby affecting accurate detection of variations in capacitance, i.e. detection of acceleration. Thus, the narrow slits are provided to act as buffers having resilience to impart a pressing force for securing the electrical connection to the case and to ease the reaction from the case.

If the slits were formed simply narrow and linear, a strong force acting on the slits could break the slits per se, or the slits could fail to absorb such a strong force, thereby distorting the diaphragm. The reaction from the case is dynamically the most intensive in the directions perpendicular to the tangents at the points of contact noted above. Where the slits have the semicircular cutouts bulging in the same directions as the projections, the slits have an increased width in the above directions perpendicular to the tangents at the points of contact. As a result, the slits can demonstrate yield strength against an increased reaction.

As a further feature of the invention, the weight is formed to have an umbrella-like shape including a cylindrical shaft portion, and a disk-like main portion having a larger diameter than the shaft portion, the shaft portion being attached at a forward end thereof to a central position of the diaphragm, the case housing a restricting member for contacting at least one of the shaft portion and the main portion to restrict an excessive displacement of the weight.

Further, the diaphragm may be formed of one of SK material (carbon tool steels: JIS G 4401), stainless steel, phosphor bronze, Be-Cu and Ti-Cu.

The acceleration sensor can obtain an output with advantage where the diaphragm has a great mechanical amplitude resulting from acceleration applied. On the other hand, there is a drawback of being damage when subjected to an excessive shock such as a fall. Thus, the restricting member is provided for restricting an excessive displacement of the weight attached in the diaphragm. This effectively prevents damage done to the diaphragm by an excessive displacement of the weight caused by a shock. Further, the diaphragm is not formed of PET (polyethylene terephthalate) or PPS (polyphenylene sulfide) film, but formed of a material having high flexural strength such as SK material (carbon tool steels: JIS G 4401), stainless steel, phosphor bronze, Be-Cu, Ti-Cu or the like. In this way, the diaphragm itself may be given increased strength. The connection between the diaphragm and weight may be achieved by adhesion, electric welding, laser spot welding, calking, etc.

### BRIEF DESCRIPTION OF THE DRAWINGS

Fig. 1 is a section taken on line A-A of Fig. 2, showing an example of construction of an acceleration sensor according to the present invention;
Fig. 2 is a view showing a shape of a diaphragm and a form of contact between a case and the diaphragm of the acceleration sensor of Fig. 1;
Fig. 3 is a perspective view showing a state of a weight attached to the diaphragm of the acceleration sensor of Fig. 1.
Fig. 4 shows an arrangement of fixed electrodes formed on an electrode substrate of the acceleration sensor of Fig. 1, in which (a) is a top plan view, and (b) is a section taken on line B-B of (a); and
Fig. 5 is a view showing a shape of a spacer of the acceleration sensor of Fig. 1.

### DESCRIPTION OF THE PREFERRED EMBODIMENT

A preferred embodiment of the acceleration sensor according to the present invention will be described hereinafter with reference to the drawings.

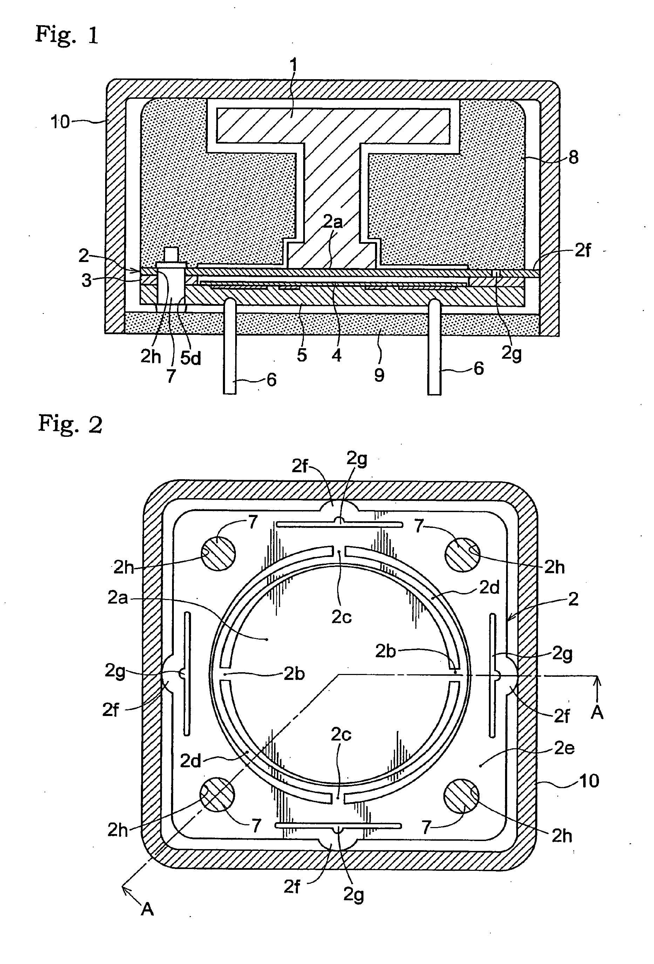

As shown in Fig. 1, the acceleration sensor according to the invention includes a conductive case 10 of channel-shaped section having a bottom at one end, and an opening at the other end. The case 10 contains an electrode substrate 5 having fixed electrodes on one surface thereof, a diaphragm 2 disposed at a predetermined distance to this electrode substrate 5 across a spacer 3 and having one end thereof opposed to the fixed electrodes and acting as a movable electrode, and a weight 1 disposed centrally of the other surface of the diaphragm 2. The sensor is constructed to detect acceleration in three orthogonal directions based on variations in capacitance between the fixed electrodes (electrode substrate 5) and the movable electrode (diaphragm 2).

In this embodiment, the case 10 has a rectangular section parallel to the bottom as shown in Fig. 2. As shown in Figs. 2 through 5, the diaphragm 2, electrode substrate 5 and spacer 3 are also rectangular to fit in the rectangular case 10.

The diaphragm 2 is not formed of PET (polyethylene terephthalate) or PPS (polyphenylene sulfide) film, but formed of a conductive metal material having high flexural strength such as SK material (carbon tool steels: JIS G 4401), stainless steel, phosphor bronze, Be-Cu, Ti-Cu or the like. By using a material of good strength property, the diaphragm 2 of suitable shape may be formed as shown in Fig. 2.

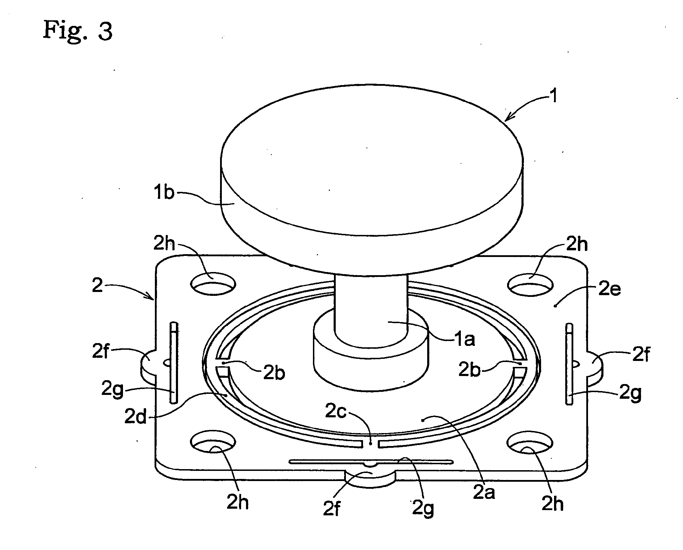

Specifically, the diaphragm 2 is divided into a fixed portion 2e located peripherally and fixed through the spacer 3 and positioning pins 7, a vibrating portion 2a located centrally and having the weight 1 at the center (see Fig. 3), and an elastic support 2b-2d connecting the fixed portion 2e and vibrating portion 2a. The elastic support 2b-2d includes first beams 2b and second beams 2c acting as torsion bar anchors, and a base 2d of the elastic support connecting these beams 2b and 2c. The base 2d is formed to have an elliptical annular shape. The first beams 2b connect the vibrating portion 2a and annular base 2d on the long axis of the elliptical shape. The second beams 2c connect the fixed portion 2e and annular base 2d on the short axis of the elliptical shape. The long axis corresponds to the second axis (X-axis). The short axis corresponds to the third axis (Y-axis). The first axis (Z-axis) is an axis extending perpendicular to the diaphragm 2, i.e. perpendicular to the first axis and second axis.

The vibrating portion 2a desirably has a large area in order to obtain greater variations in the capacitance between the diaphragm 2 (movable electrode) and the electrode substrate 5 (fixed electrodes). Since the diaphragm 2 is formed of a metal material of high flexural strength, it is not desirable if the beams 2b and 2c are too short, but a certain length is required in order to obtain sufficient amplitude. In order to secure both the area of the vibrating portion 2a and the length of beams 2b and 2c, it is possible, for example, to form the vibrating portion 2a to have an approximately perfectly circular shape and to form the base 2d connecting the beams 2b and 2c and the vibrating portion 2a to have an approximately perfectly circular and very narrow annular shape. However, since the elastic support 2b-2d including the base 2d acts as a spring, its elastic movement will be impaired if the base 2d is formed very thin as noted above. As a result, a difference could occur in output between the X- and Y-directions when the acceleration sensor detects vibration along the second axis (X-axis) and vibration along the third axis (Y-axis) among the three directions.

In this embodiment, as shown in Fig. 2, the base 2d is formed to have an elliptical annular shape. The elastic support 2b-2d includes this annular base 2d, the two first beams 2b connecting the vibrating portion 2a and annular base 2d on the long axis of the elliptical shape, and the two second beams 2c connecting the fixed portion 2e and annular base 2d on the short axis of the elliptical shape. This construction allows the vibrating portion 2a to be formed large and circular, and can secure the length of beams 2b and 2c and the width of base 2d. As a result, large variations in capacitance can be obtained, and the stability of movement of the elastic support 2b-2d is enhanced. Thus, sufficient output is obtained, and little difference occurs in output between the X- and Y-directions. An amplifier circuit or the like will be required where output is low, and a correcting circuit or the like will be required where a difference occurs in output between the X- and Y-directions. These problems are lightened by the construction of the diaphragm 2 itself to simplify circuit constructions.

As shown in Figs. 1 and 2, the case 10 and diaphragm 2 are electrically connected to each other through contacts at projections 2f formed peripherally of the diaphragm 2. Fig. 2 shows an example of using the square case 10. While the vibrating portion 2a of the diaphragm 2 is formed circular, the diaphragm 2 as a whole is formed rectangular in this example. The diaphragm 2 has connecting bores 2h arranged at intervals of 90 degrees circumferentially thereof for receiving positioning pins 7 for fixing the electrode substrate 5, spacer 3 and diaphragm 2 to one another. Further, the diaphragm 2 has conducting lugs 2f (projections) arranged at intervals of 90 degrees and spaced from the connecting bores 2h by 45 degrees circumferentially thereof for electrically connecting the diaphragm 2 to the four sides of the square case 10. With this construction, when assembling the acceleration sensor, the conducting lugs 2f (projections) may be placed in contact with the case 10, thereby securing an electrical connection simultaneously with assembly. That is, this construction facilitates assembly. In this example, the conducting lugs 2f are formed on all the four sides. This is advantageous in equalizing forces for causing diaphragm 2 to contact the case 10, in paralleling contact resistance to reduce combined resistance, and in providing symmetry not dependent on a mounting direction. However, this feature does not limit the invention, but at least one point of contact will serve the purpose.

Further, the diaphragm 2 defines slits 2g extending parallel to the tangents between the conducting lugs 2f (projections) and case 10, that is, parallel to the sides of the case 10 which is square as in this example as shown in Fig. 2. The slits 2g are spaced from the sides of the case 10 in directions perpendicular thereto and toward the center of the diaphragm 2. While assembly is facilitated by placing the conducting lugs 2f in contact with the case 10, the diaphragm 2 could undergo an excessive force applied thereto by a reaction transmitted from the case 10 to the conductive lugs 2f. If the diaphragm 2 should be distorted by this reaction, for example, the distance between the diaphragm 2 and electrode substrate 5 could become uneven, or variations could occur with vibration. This is undesirable for accurate detection of variations in capacitance, i.e. detection of acceleration. The slits 2g are provided to ease the reaction from the case 10, and to secure a pressure for assuring the electrical connection to the case 10. With this construction, the regions of the slits 2g serve as buffers having resilience for conveniently pressing the diaphragm 2 on the case 10 and absorbing the reaction from the case 10. This construction secures the electrical connection between the diaphragm 2 and case 10, and prevents distortion of the diaphragm 2.

In this embodiment, as shown in Fig. 2, the slits 2g are formed narrow and extend parallel to the tangents, with semicircular cutouts bulging in the same directions as the conducting lugs 2f (projections) on lines extending perpendicular to the tangents between the conducting lugs 2f and case 10. When the conducting lugs 2f contact the case 10 and receive reaction from the case 10, the slits 2g buffer the reaction. If the slits 2g were formed simply narrow and linear, a strong force acting on the slits 2g to be buffered could break the slits 2g per se. The slits 2g could fail to absorb such a strong force, thereby distorting the diaphragm 2. The reaction from the case 10 is dynamically the most intensive in the directions perpendicular to the tangents, at the points of contact between the case 10 and conductive lugs 2f. Where the slits 2g have the semicircular cutouts bulging in the same directions as the conducting lugs 2f, the slits 2g have an increased width in the above directions perpendicular to the tangents at the points of contact. As a result, the slits 2g can demonstrate yield strength against an increased reaction.

Fig. 3 is a perspective view showing a state of the weight 1 attached to the diaphragm 2 shown in Figs. 1 and 2. As shown in Fig. 3, the weight 1 is formed to have an umbrella-like shape, including a cylindrical shaft portion 1a, and a disk-like main portion 1b having a larger diameter than the shaft portion 1a. The shaft portion 1a has a disk-like mounting portion at a forward end remote from the main portion 1b. This mounting portion has a larger diameter than the shaft portion 1a, and a smaller diameter than the main portion 1b. The weight 1 is attached to the diaphragm 2 with the center of the mounting portion coinciding with the center of the vibrating portion 2a of the diaphragm 2. That is, the weight 1 is attached to have the center of gravity thereof coinciding with the center of the diaphragm 2. The axis extending through the center of gravity of the weight 1 and perpendicular to the diaphragm 2 is the first axis or Z-axis. That is, the acceleration sensor detects acceleration by using the weight 1 to cause a shock applied to the sensor to generate vibrations in the XYZ directions. The weight 1 is formed of stainless steel, but may be formed of a material of greater specific gravity than stainless steel, such as tungsten (having the same specific gravity as gold), for increasing amplitude. The connection between the diaphragm 2 in the formed of a metal plate and the weight 1 may be achieved by adhesion, electric welding, laser spot welding, calking, etc.

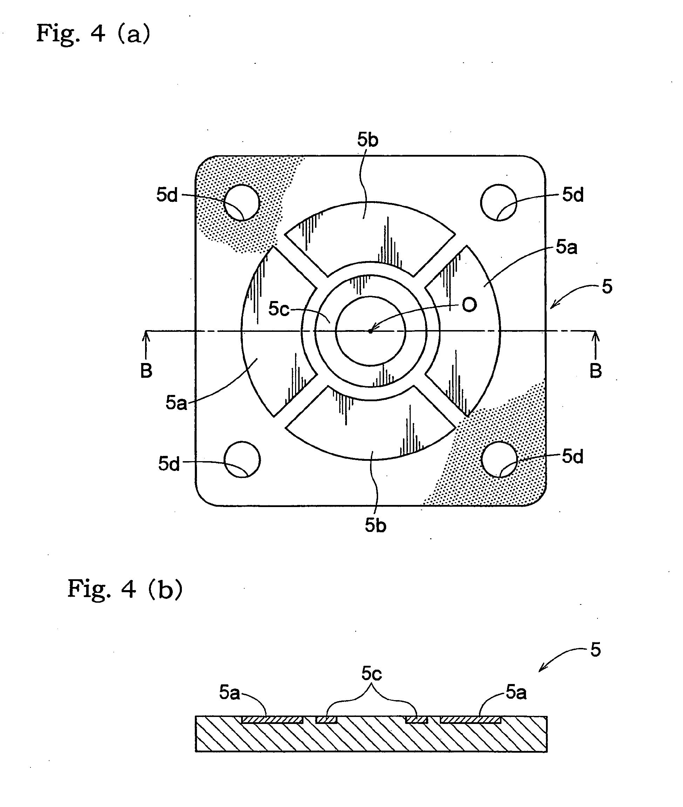

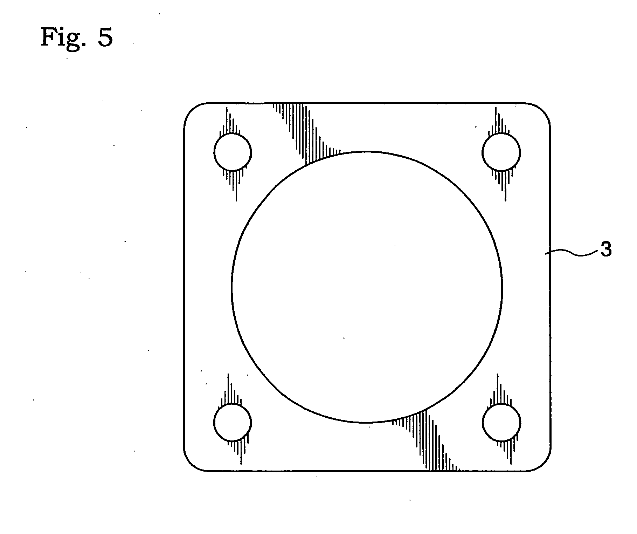

The electrode substrate 5 opposed to the diaphragm 2 across the spacer 3 has a first, second and third fixed electrode 5c, 5b and 5a as shown in Fig. 4 (a). The first fixed electrode 5c is an annular electrode formed around the first axis (Z-axis) extending through the center of gravity of the weight 1 and perpendicular to the electrode substrate 5. The second fixed electrodes 5a and third fixed electrodes 5b are two parts each of an annular electrode having a larger diameter than the first fixed electrode 5c, and divided by dividing axes intersecting at right angles to each other at an intersection O of the electrode substrate 5 and the first axis, and forming 45 degrees with the second axis and third axis extending perpendicular to the first axis. Further, the electrode substrate 5, as shown in Fig. 1, has an electret layer 4 covering the surfaces of fixed electrodes 5a-5c. After being positioned by the positioning pins 7 inserted in the connecting bores 5d, the electrode substrate 5 is assembled into the case 10 as maintained at the predetermined distance to the diaphragm 2 by the spacer 3 (Fig. 5) having similar connecting bores for positioning. Acceleration in the three orthogonal directions is detected based on variations in capacitance between the fixed electrodes (electrode substrate 5) and movable electrode (diaphragm 2).

The electret layer 4 is formed of FEP (tetrafluoroethylene-hexafluoropropylene copolymer), PTFE (polytetrafluoroethylene) or PFA (tetrafluoroethylene-fluoroalkylvinylether copolymer). The electret layer 4 may be formed by a method in which a fluoride film of the above composition is applied, or an aqueous dispersion of a fluororesin having the above composition is applied and then calcined as shown in Japanese Patent No. 3387012. The electret layer 4 obtained by applying FEP film as in the conventional method is 12µm or more. On the other hand, the calcined electret layer 4 is about 5.0µm in thickness, and the very thin electret layer 4 can be formed.

On the other hand, the fixed electrodes 5a-5c described above are formed on the electrode substrate 5 as an electric conducting pattern of copper foil. Where such an electric conducting pattern of copper foil is formed by etching or the like on a glass epoxy backing serving as an insulator as is an ordinary printed circuit board, the pattern has a thickness of about 35µm. Even when formed especially thin, the pattern is about 5µm thick. Consequently, the pattern of copper foil is raised above the backing of the substrate. When, as in this embodiment, the electret layer 4 is formed thin, in particular, the thickness of the electret layer 4 may become uneven. This may affect the capacitance detected and the voltage outputted as a result. To avoid such an inconvenience, as shown in Fig. 4 (b), the foil forming the electrode pattern may be embedded in the backing of the substrate to be flush with the surface, without protruding or sinking from the surface of the backing. This realizes a uniform thickness of the electret layer 4.

In this way, the electret layer 4 is formed to cover the fixed electrodes 5a-5c formed of copper foil. However, copper foil easily oxidizes and discolors to reduce the function as electret. Particularly when the electret layer 4 is formed by calcining an aqueous dispersion of fluororesin applied to the surface of the electrode substrate 5, the copper foil portion may oxidize and become dark to reduce the function as electret. To avoid this inconvenience, the copper foil of the fixed electrodes 5a-5c may be plated with nickel, gold or the like, and then coated with the electret.

The electrode substrate 5, with the electret layer 4 formed on one surface thereof, has a capacitor, a resistor and an operational amplifier for signal processing mounted, as necessary, on the other surface. Signals are transmitted via through holes to these components from the fixed electrodes 5a-5c on the surface having the electret layer 4. As shown in Fig. 1, terminals 6 are placed in contact with, or soldered to, the other surface of the electrode substrate 5. The terminals 6 extend through a bottom lid 9 closing the opening of the case 10, to transmit signals from the fixed electrodes 5a-5c, or signals produced by a primary processing of these signals, and transmit power.

Since the diaphragm 2 is formed of a material of good strength property as described hereinbefore, its construction has a certain degree resistance to a strong shock. However, when excessive acceleration is applied as from a fall, damage can be done to the connection between the diaphragm 2 and weight 1, and to the elastic support 2b-2d. To cope with such an incident, as shown in Fig. 1, a restricting member 8 is mounted in the case 10 for contacting at least the shaft portion 1a or main portion 1b to restrict an excessive displacement of the weight 1. With this restricting member 8 provided, the weight 1 will contact the restricting member 8 before the diaphragm 2 is damaged. Thus, the acceleration sensor has excellent shock resistance.

As described above, the present invention provides a three-axis acceleration sensor having a simple construction for improving shock resistance without lowering sensor sensitivity.

While the invention provides an acceleration sensor for detecting acceleration in directions along three axes, the sensor may be used as a vibration sensor for detecting vibration acting in any direction by using the directions along three axes in combination. This vibration sensor may be used for a vibrograph or pedometer.

## Claims

1. An acceleration sensor for detecting acceleration in three orthogonal directions, comprising:
an electrode substrate (5) having fixed electrodes (5c, 5b, 5a) arranged on one surface thereof;
a spacer (3) for defining a predetermined spacing with said electrode substrate (5);
a diaphragm (2) having one surface thereof opposed to said fixed electrodes (5c, 5b, 5a) across said spacer (3) and acting as a movable electrode;
a weight (1) mounted centrally of the other surface of said diaphragm (2); and
a conductive case (10) for accommodating said electrode substrate (5), said spacer (3), said diaphragm (2) and said weight (1);
wherein said acceleration in three orthogonal directions is detected based on variations in capacitance between said fixed electrodes (5c, 5b, 5a) and said movable electrode;
**characterized in that**
said fixed electrodes (5c, 5b, 5a) include an annular, first fixed electrode (5c) extending around a first axis extending through a center of gravity of said weight (1) and perpendicular to said electrode substrate (5), and second fixed electrodes (5b) and third fixed electrodes (5c) that are two parts each of an annular electrode having a larger diameter than said first fixed electrode (5c), and divided by dividing axes intersecting at right angles to each other at an intersection of said electrode substrate (5) and said first axis, and forming 45 degrees with a second axis and a third axis extending perpendicular to the first axis; and
that said electrode substrate (5) has an electret layer (4) formed to cover surfaces of said fixed electrodes (5c, 5b, 5a).

2. An acceleration sensor as defined in claim 1, **characterized in that** said fixed electrodes (5c, 5b, 5a) are formed on a surface of said electrode substrate (5) without protruding or sinking therefrom.

3. An acceleration sensor as defined in claim 1 or 2, **characterized in that** said fixed electrodes (5c, 5b, 5a) are formed of copper foil, and said electret layer (4) is formed, after plating said fixed electrodes (5c, 5b, 5a) with nickel or gold, by applying thereto and calcining an aqueous dispersion of a fluororesin, or applying thereto a fluoride film.

4. An acceleration sensor as defined in any one of claims 1 to 3, **characterized in that** said diaphragm (2) includes a fixed portion (2e) located peripherally and fixed through said spacer (3), a vibrating portion (2a) located centrally and having said weight (1), and an elastic support portion (2b, 2c, 2d) connecting said fixed portion (2e) and said vibrating portion (2a), said elastic support portion (2b, 2c, 2d) including a ring (2d) having an elliptical shape, first beams (2b) connecting said vibrating portion (2a) and said ring (2d) on a long axis of said elliptical shape, and second beams (2c) connecting said fixed portion (2e) and said ring (2d) on a short axis of said elliptical shape.

5. An acceleration sensor as defined in any one of claims 1 to 4, **characterized in that** said diaphragm (2) includes projections (2f) formed peripherally thereof for electrically connecting said case (10) and said diaphragm (2).

6. An acceleration sensor as defined in claim 5, **characterized in that** said diaphragm (2) defines narrow slits (2g) in positions inwardly of said projections (2f), and extending parallel to tangents to said projections (2f) at points of contact between said projections (2f) and said case (10).

7. An acceleration sensor as defined in claim 6, **characterized in that** said slits (2g) have semicircular cutouts bulging in the same directions as said projections (2f) on lines extending perpendicular to the tangents at said points of contact.

8. An acceleration sensor as defined in any one of claims 1 to 8, **characterized in that** said weight (1) is formed to have an umbrella-like shape including a cylindrical shaft portion (1a), and a disk-like main portion (1b) having a larger diameter than said shaft portion (1a), said shaft portion (1a) being attached at a forward end thereof to a central position of said diaphragm (2), said case (10) housing a restricting member (8) for contacting at least one of said shaft portion (1a) and said main portion (1b) to restrict an excessive displacement of said weight (1).

9. An acceleration sensor as defined in any one of claims 1 to 8, **characterized in that** said diaphragm (2) is formed of one of carbon tool steel, stainless steel, phosphor bronze, Be-Cu and Ti-Cu.
